(19) Europäisches Patentamt
European Patent Office
Office européen des brevets

(11) EP 1 870 429 A2

(12) EUROPÄISCHE PATENTANMELDUNG

(43) Veröffentlichungstag:
**26.12.2007 Patentblatt 2007/52**

(51) Int Cl.:
***C08J 5/22*** (2006.01) ***B01D 69/12*** (2006.01)

(21) Anmeldenummer: **07015005.7**

(22) Anmeldetag: **02.05.2000**

(84) Benannte Vertragsstaaten:
**AT BE CH CY DE DK ES FI FR GB GR IE IT LI LU MC NL PT SE**

(30) Priorität: **30.04.1999 DE 19919881**

(62) Dokumentnummer(n) der früheren Anmeldung(en) nach Art. 76 EPÜ:
**00934975.4 / 1 177 247**

(71) Anmelder:
- **Häring, Thomas**
  **70619 Stuttgart (DE)**
- **Häring, Rima**
  **70619 Stuttgart (DE)**

(72) Erfinder: **Die Erfindernennung liegt noch nicht vor**

Bemerkungen:
Diese Anmeldung ist am 31 - 07 - 2007 als Teilanmeldung zu der unter INID-Kode 62 erwähnten Anmeldung eingereicht worden.

# (54) Komposite und Kompositmembranen

(57) Zusammenfassung: Gegenstand der Erfindung ist ein Komposit oder ein Komposimembran aus einem Ionomeren und einem anorganischen gegebenenfalls funktionalisierten Schichtsilikat. Dabei kann das Ionomer sein: (a) ein Kationenaustauscherpolymer; (b) ein Anionenaustauscherpolymer; (c) ein Polymer, das auf der Polymerkette sowohl Anionenaustauschergrupplerungen als auch Kakionenaustauschergruppierungen enthält: (d) ein Blend aus (a) und (b), wobei das Mischungsverhältnis von 100 % (a) zu 100 % (b) reichen kann. Der Blend kann ionisch und noch kovalent vernetzt sein. Dabei kann die anorganische Komponente aus der Gruppe der Schicht- oder Gerüstsilikate sein. Allgemein sind die Bentonite und Zeolithe, im Speziellen Montmorillonit bevorzugt. Das Mischungsverhältnis Ionomer/Bentonit reicht dabei von 99/1 zu 30/70. Desweiteren ist Gegenstand dieser Erfindung die Anwendung der Komposites/Kompositmembranen: als Protoncnleitor in Membranbrennstoffzellen ($H_2$-Bronnstoffzellen PEFC, Direktmethanolbrennstoffzellen DMFC) im Temperaturbereich über 100°C; in (Elektro)membrantrennverfahren wie Dialyse, Diffusiondialyac, Gastrennung, Fervaporation, Perstraktion und in Mikro- und Ultrafiltration insbesondere wegen ihrer Antifoulingeigenschaften: als katalytische Membranen in Katalysator-Membran-Reaktoren.

EP 1 870 429 A2

**Beschreibung**

**Stand der Technik**

Ionomermembranen finden Verwendung in vielen Prozessen, so zum Beispiel in Membranbrennstoffzellen, in der Elektrodialyse, in der Diffusionsdialyse, in der Elektrolyse (PEM-Elektrolyse, Chlor-Alkali-Elektrolyse) oder bei elektrochemischen Prozessen.

Nachteil der verfügbaren Membranen ist jedoch, daß ihre Protonenleitfähigkeit im Temperaturbereich über 100°C in den meisten Fällen aufgrund Membranaustrocknung stark abnimmt. Der Temperaturbereich über 100°C ist jedoch für die Brennstoffzellenanwendung von Ionomermembranen sehr interessant, da über 100°C die Temperatursteuerung der Brennstoffzelle stark vereinfacht ist und die Katalyse der Brennstoffzellenreaktion, wesentlich verbessert ist (Überspannungen verringert, keine CO-Beladung mehr, die den Katalysator vergiften könnte).

Nur wenige Beispiele für Membranen, die auch über 100°C noch eine gute Protonenleitfähigkeit aufweisen, sind aus der Literatur bekannt, so zum Beispiel Poly(phenylen)e mit Carbonyl-1,4-phenylen-oxyphenyl-4-Sulfonäure-Seitengruppen. Die Protonenleitfähigkeit dieser Membranen nimmt jedoch oberhalb 130°C auch stark ab, und der Grund für die gute Protonenleitfähigkeit zwischen 100°C und 130°C ist auch nicht klar.

Die Leitung der Protonen basiert auf dem Grotthus-Mechanismus, nach dem in sauren Medien Protonen, in alkalischen Lösungen Hydroxylionen als Ladungsträger auftreten. Es besteht eine über Wasserstoffbrückenbindungen vernetzte Struktur, die den eigentlichen Ladungstransport ermöglicht. Das bedeutet, daß das in der Membran vorhandene Wasser eine tragende Rolle beim Ladungstransport spielt: Ohne dieses zusätzliche Wasser findet in diesen kommerziell erhältlichen Membranen kein nennenswerter Ladungstransport durch die Membran mehr statt, sie verliert ihre Funktion. Andere, neuere Entwicklungen, die anstelle des Fluorkohlenwasserstoffgerüsts mit Phosphatgerüsten arbeiten, benötigen ebenfalls Wasser als zusätzlichen Netzwerkbildner *(*Alberti et al., SSPC9, Bled, Slowenien, 17.-21.8.1998, Extended Abstracts, S. 235 *)*. Die Zugabe kleinster $SiO_2$-Partikel zu o.g. Membranen *(*Antonucci et. al., SSPC9, Bled, Slowenien, 17.-21.8.1998, Extended Abstracts, S. 187*)* führt zwar zu einer Stabilisierung der Protonenleitung bis 140 °C, allerdings nur unter 4,5 bar Druck Betriebsbedingungen. Ohne erhöhten Arbeitsdruck verlieren auch diese Membranen oberhalb 100 °C ihr Wassernetzwerk und trocknen aus.

Ein wesentlicher Nachteil aller o. g. Membrantypen ist daher, daß sie selbst unter optimalen Betriebsbedingungen nur für Anwendungstemperaturen bis max. 100 °C geeignet sind.

In gleicher Weise wie oben genannt haben Denton et al. (US 6,042,958) Komposite aus ionenleitenden Polymeren und porösen Substraten hergestellt. Als silikatische Komponenten wurden hier Glas, Keramik oder Silica verwendet. In den angeführten Beispielen wurde auch hier nicht über die Betriebstemperatur von 80°C hinausgegangen.

In der Direkt-Methanol-Brennstoffzelle (DMFC) ist zwar ausreichend Wasser vorhanden, jedoch führt der Durchtritt von Methanol durch die Membran zu einem erheblichen Leistungsabfall.

Stellt man nun Komposite aus sulfonierten Polyaryletherertherketonmembranen (EP 0574791 B1) oder sulfoniertern Polyethersulfon und Silica her, so quillt die Membran bei einer Kationenaustauserkapazität von 1,5 [meq/gr] so stark auf das sie letztendlich zerstört wird.

Der Vorteil der erfindungsgemäßen Komposite und der daraus hergestellten Membranen ist die Einlagerung der einer organischen Komponente, insbesondere von protonierten Stickstoffbasen in die Kavitäten der Schichtsilikate, was eine Vernetzungskomponente darstellt, wenn die Base an einem Polymerbackbone sich befindet.. Desweiteren ermöglicht die gezielte Einlagerung von Kationen oder Metallhydroxiden mit nachfolgender Umsetzung zu den entsprechenden Metalloxiden die lewissauren. Eigenschaften und Größe der Kavitäten der Membranen in einem weiten Bereich zu variieren. Die Schichtsilikate lassen sich darüber hinaus funktionalisieren, so daß sie mit Ionomeren in die sie eingebettet sind entweder wechselwirken oder das sie umgebende Medium gemäß ihrer funktionelle Gruppe beeinflussen.

Schichtsilicate (Tonmineralien) haben einige interessante Eigenschaften:

- sie sind in der Lage, Hydratwasser bis 250°C zu halten.
- in diese Stoffe können zusätzlich Metallkationen und Metalloxide eingelagert werden, wodurch eine intrinsische Protonenleitfähigkeit induziert wird nach dem allgemeinem Schema:

$$M^{n+}(H_2O) \rightarrow (M\text{-}OH)^{(n-1)+} + H^+$$

  [Zeolite, clay and heteropoly acid in organic reactions, Y.Izumi, K.Urabe, M.Onaka; 1992; Weinheim, VCH-Verlag, S.26].
- die Schichtsilicate, die lewissaure Kavitäten aufweisen, können durch Säure-Base-Wechselwirkung mit den basischen Gruppen von basischen Polymeren interkalieren [Kunststoffnanokomposite, Symposium: Von der Invention

zur Innovation, Publikation zum Symposium des Fonds der Chemischen Industrie am 6.Mai 1998 in Köln].

Aufgrund dieser Eigenschaft wurden bereits einige Typen von Schichtsilicat/Polymer-Komposites synthetisiert. So haben Mühlhaupt et al. Komposites aus Montmorillonit und Polypropylen, Montmorillonit und Polyamid, und Montmorillonit und Plexiglas hergestellt. Bei diesen Komposites wird z.B. das Plexiglas durch die Mischung mit Montmorillonit schwerentflammbar, da die eingemischten Schichtsilicate Barrieren für die bei der Verbrennung entstehenden Pyrolysegase darstellen.

**4. Aufgabe der vorliegenden Erfindung:**

Ausgehend von diesem Stand der Technik war es die Aufgabe der vorliegenden Erfindung Komposite bereitzustellen, die eine hohe Ionenleitfähigkeit (insbesondere Protonenleitfähigkeit), bei gleichzeitig begrenzter Quellung besitzen und eine Betriebstemperatur in Elektrochemischen Zellen von mehr als 100°C ermöglichen.

Gegenstand der vorliegenden Erfindung ist somit ein ionenleitender Komposit, enthaltend eine Säure und/oder eine organische Base und ein Schichtsilikat, dadurch gekennzeichnet, daß die Zusammensetzung des Säure-Base Anteils zu 1 bis 99 Gew.% und das Schichtsilikat zu 99 bis 1 Gew.% enthalten ist.

**Erfindungsbeschreibung (Produktbeschreibung)**

**(a) Die Säure kann sein**
ein Kationenaustauscherpolymer (mit den Kationenaustauschergruppen $-SO_3H$, -COOH, $-PO_3H_2$, wobei das Polymer nur mit einer der beschriebenen Kationenaustauschergruppen oder mit einer Mischung der beschriebenen Kationenaustauschergruppen modifiziert sein kann); das Polymer kann dabei unvernetzt oder kovalent vernetzt sein. Im allgemeinen liegt die Ionenaustauscherkapazität zwischen 0,1 und 12 Milliäquvalent pro Gramm. Im Besonderen zwischen 0,3 und 8 Milliaquvalent pro Gramm. Speziell zwischen 0,5 und 2 Milliäquivalent pro Gramm. Besonders bevorzugt als Backbone sind dabei Thermoplasten.

**(b)** Die Säure kann auch eine organische oder anorganische niedermolekulare Säure sein. Für den anorganischen Fall ist besonders bevorzugt die Schwefelsäure und die Phosphorsäure. Für den organischen Fall kommen alle niedermolekularen Säuren in Betracht die Sulfonsäuren oder Carbonsäuren sind. Speziell alle Aminosulfonsäuren und als ihre Vorläufer die Aminosulfochloride.

**(c) Die Base kann sein**
ein Anionenaustauscherpolymer (mit den Anionenaustauschergruppen $-NR_3^+$ (R=H, Alkyl, Aryl), Pyridinium $PyrR^+$, Imidazolium $ImR^+$, Pyrazolium $PyrazR^+$, Triazolium $TriR^+$ und andere organische basische aromatische und/oder nichtaromatische Gruppierungen (R=H, Alkyl, Aryl), wobei das Polymer nur mit einer der beschriebenen Anionenaustauschergruppen oder mit einer Mischung der beschriebenen Anionenaustauschergruppen modifiziert sein kann); das Polymer kann dabei unvernetzt oder kovalent vernetzt sein. Die Anionenaustauscherkapazität liegt dabei im allgemeinen zwischen 1 und 15 Milliäquivalent pro Gramm. Im Besonderen zwischen 3 und 12 Milliäquivalent je Gramm und im Besonderen zwischen 6 und 10 Milliäquvalent pro Gramm. Als Backbone werden wieder alle Thermoplasten bevorzugt besonders Polysulfon, Polyetheretherketon, Polybenzimidazole und Polyvinylpyridin.

**(d)** Die Base kann eine organische oder anorganische niedermolekulare Base sein. Als organische niedermolekulare Base sind alle Guanidinderivate besonders bevorzugt.

**(e)** Die funktionelle Gruppe der Säure und der Base können sich im selben Molkül befinden. Dieses Molekül kann niedermolekular oder hochmolekular sein. Ist es ein Polymer, dann befinden sich auf der Polymerkette sowohl Anionenaustauschergruppen aus (c) als auch Kationenaustauschergruppen aus (a).

**(f)** Die genannten Säuren und Basen von (a) bis (e) können im Komposit gemischt sein. Jedes Mischungsverhältnis kann dabei angenommen werden. Der Blend kann dabei zusätzlich zur ionischen Vernetzung noch kovalent vernetzt sein.

**(g)** Ist sowohl die Säure als auch die Base niedermolekular so ist zusätzlich noch ein unmodifiziertes Polymer im Komposit enthalten.

**(h)** Der anorganische aktive Füllstoff ist ein Schichtsilikat auf der Basis von Montmorillonit, Smeetit, Illit, Sepiolit, Palygorskit, Muscovit, Allevardit, Amesit, Hectorit, Talkum, Fluorhectorit, Saponit, Beidelit, Nontronit, Stevensit, Bentonit, Glimmer, Vermiculit, Fluorvermiculit, Halloysit, Fluor enthaltende synthetische Talkumtypen oder Mischungen aus zwei oder mehr der genannten Schichtsilikate. Das Schichtsilikat kann delaminiert oder pillartiert sein. Besonders bevorzugt wird Montmorillonit.

Der Gewichtsanteil des Schichtsilikates kann allgemein von 1 bis 80 Prozent betragen, besonders von 2 bis 30 Gew.% und speziell von 5 bis 20% Gew..

**Beschreibung des funktionalisierten Schichtsilikates:**

Unter einem Schichtsilikat versteht man im allgemeinen Silikate, in welchen die $SiO_4$-Tetraeder in zweidimensionalen unendlichen Netzwerken verbunden sind. (Die empirische Formel für das Anion lautet $(Si_2O_5^{2-})_n$). Die einzelnen Schichten sind durch die zwischen ihnen liegenden Kationen miteinander verbunden, wobei meistens als Kationen Na, K, Mg, Al oder/und Ca in den natürlich vorkommenden Schichtsilikaten vorliegen.

Unter einem delaminierten funktionalisiertem Schichtsilikat sollen Schichtsilikate verstanden werden, bei welchen durch Umsetzung mit sogenannten Funktionalisierungsmitteln die Schichtabstände zunächst vergrößert werden. Die Schichtdicken derartiger Silikate vor der Delaminierung betragen üblicherweise von 5 bis 100 Angström, vorzugsweise 5 bis 50 und insbesondere 8 bis 20 Angström. Zur Vergrößerung der Schichtabstände (Hydrophobierung) werden die Schichtsilikate (vor der Herstellung der erfindungsgemäßen Komposite) mit sogenannten funktionalisierenden Hydrophobierungsmietteln umgesetzt, welche oft auch als Oniumionen oder Oniumsalze bezeichnet werden.

Die Kationen der Schichtsilikate werden durch organische funktionalisierende Hydrophobierungsmittel ersetzt, wobei durch die Art des organischen Restes die gewünschten Schichtabstände eingestellt werden können, die sich nach der Art des jeweiligen funktionalisierenden Moleküls oder Polymeren, in welches das Schichtsilikat eingebaut werden soll, richten.

Der Austausch der Metallionen kann vollständig oder teilweise erfolgen. Bevorzugt ist ein vollständiger Austausch der Metallionen. Die Menge der austauschbaren Metallionen wird üblicherweise in Milliäquivalent (meq) pro 1 g Schichtsilikat angegeben und als Ionenaustauscherkapazität bezeichnet.

Bevorzugt sind Schichtsilikate mit einer Kationenaustauscherkapazität von mindestens 0,5, vorzugsweise 0,8 bis 1,3 mcq/g.

Geeignete organische funktionalisierende Hydrophobierungsmittel leiten sich von Oxonium-, Ammonium-, Phosphonium- und Sulfoniumionen ab, welche einen oder mehrere organische Reste tragen können.

Als geeignete funktionalisierende Hydrophobierungsmittel seien solche der allgemeinen Formel I und/oder II genannt:

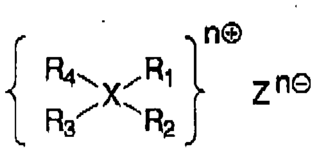

I

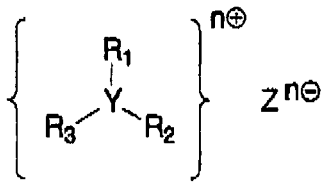

II

Wobei die Substituenten folgende Bedeutung haben:

R1, R2, R3, R4 unabhängig voneinander Wasserstoff, einen geradkettigen verzweigten, gesättigten oder ungesättigten Kohlenwasserstofftest mit 1 bis 40, vorzugsweise 1 bis 20 C-Atomen, welcher gegebenenfalls mindestens eine funktionelle Gruppe trägt oder 2 der Reste miteinander verbunden sind, insbesondere zu einem heterocyclischen Rest mit 5 bis 10 C-Atomen besonders bevorzugt mit einem und mehr N-Atomen.
X für Phosphor oder Stickstoff,
Y für Sauerstoff oder Schwefel,
n für eine ganze Zahl von 1 bis 5, vorzugsweise 1 bis 3 und
Z für eine Anion steht

Geeignete funktionelle Gruppen sind Hydroxyl-, Nitro- oder Sulfogruppen, wobei Carboxyl- und Sulfonsäuregruppen besonders bevorzugt sind. Ebenso sind besonders bevorzugt Sulfochlorid- und Carbonsäurechloride.

Geeignete Anionen Z leiten sich von Protonen liefernden Säuren, insbesondere Mineralsäuren ab, wobei Halogene wie Chlor, Brom, Flour, Iod, Sulfat, Sulfonat, Phosphat, Phosphonat, Phosphit und Carboxylat, insbesondere Acetat bevorzugt sind. Die als Ausgangsstoffe verwendeten Schichtsilikate werden in der Regel in Form einer Suspension umgesetzt. Das bevorzugte Suspendierungsmittel ist Wasser, gegebenenfalls in Mischung mit Alkoholen, insbesondere niederen Alkoholen mit 1 bis 3 Kohlenstoffatomen. Ist das funktionalisierende Hydrophobierungsmittel nicht wasserlöslich, so wird das Lösungmittel bevorzugt indem es sich löst. Besonders ist dies dann ein aprotisches Lösungsmittel. Weitere Beispiele für Suspendiermittel sind Ketone und Kohlenwasserstoffe. Gewöhnlich wird ein mit Wasser mischbares Suspendierungsmittel bevorzugt. Bei der Zugabe des Hydrophobierungsmittel zum Schichtsilikat tritt ein Ionenaustausch ein, wodurch das Schichtsilikat überlicherweise aus der Lösung ausfällt. Das als Nebenprodukt des Ionenaustausch entstehende Metallsalz ist vorzugsweise wasserlöslich, so daß das hydrophobierte Schichtsilikat als kristalliner Feststoff durch z.B. Abfiltrieren abgetrennt werden kann.

Der Ionenaustausch ist von der Reaktionstemperatur weitgehend unabhängig. Die Temperatur liegt vorzugsweise über dem Kristallisationspunkt des Mediums und unter seinem Siedepunkt. Bei wäßrigen Systemen liegt die Temperatur zwischen 0 und 100°C, vorzugsweise zwischen 40 und 80°C.

Für Kationen- und Anionenaustauscherpolymer sind Alkylammoniumionen bevorzugt, besonders dann wenn als funktionelle Gruppe zusätzlich noch ein Carbonsäurechlorid oder Sulfonsäurechlorid an demselben Molekül vorhanden ist. Die Alkylammoniumionen sind über übliche Methylierungsreagenzien, wie Methyljodid erhältlich. Geeignete Ammoniumionen sind omega-Aminocarbonsäuren, besonders bevorzugt sind omega-Aminosulfonsäuren und die omega-Alkylaminosulfonsäuren.

Die omega-Aminosulfonsäuren und die omega-Alkylammosulfonsäuren sind erhältlich mit üblichen Mineralsäuren, beispielsweise Salzsäure, Schwefelsäure oder Phosphorsäure oder aus Methylierungsreagenzien wie Methyljodid.

Weitere bevorzugte Ammoniumionen sind Pyridin- und Laurylammoniumionen.

Nach der Hydrophobierung weisen die Schichtsilikate im allgemeinen einen Schichtabstand von 10 bis 50 Angström, vorzugsweise von 13 bis 40 Angström auf.

Das hydrophobierte und funktionalisierte Schichtsilikat wird von Wasser durch Trocknen befreit. Im allgemeinen enthält das so behandelte Schichtsilikat noch einen Restwassergehalt von 0-5 Gew. % Wasser. Anschließend kann das hydrophobierte Schichtsilikat als Suspension in einem möglichst wasserfreien Suspendiermittel mit den erwähnten Polymeren gemischt werden und zu weiterverarbeitet werden.

Erfindungsgemäß werden die Polymere, besonders bevorzugt die thermoplastischen funktionalisierten Polymere (Ionomere) zu der Suspension der hydrophobierten Schichtsilikate gegeben. Dies kann in bereits gelöster Form erfolgen oder die Polymere werden in der Suspension selbst in Lösung gebracht. Allgemein ist der Anteil der Schichtsilikate zwischen 1 und 70 Gew.%. Besonders zischen 2 und 40 Gew. % und speziell zwischen 5 und 15 Gew. %.

**Verfahren zur Herstellung der Komposite**

Die vorliegende Erfindung betrifft desweiteren ein Verfahren zur Herstellung der Kompositmembranen.

Im Folgenden werden Verfahrenbeispiele zur Herstellung von protonenleitenden Kompositen mit hoher Protonenleitfähig beschrieben.

1) Ein Aminoarylsulfochlorid wird in Tetrahydrofuran gelöst. Danach wird eine entsprechende Menge Montmorillonit K10 hinzugegeben. Der Montmorillonit ist protonenausgetauscht und getrocknet. Danach wird mehrere Stunden gerührt. Die Rührzeit ist abhängig von der Molekülgröße des Aminoarylsulfochlorides und dem Verhältnis der Aminogruppe zur Kationenaustauscherkapazität des Montmorillonites. Während des Rührvorganges interkaliert die Aminogruppe in die Kavitäten des Montmorillonites. Zu der Suspension gibt man nun in Tetrahydrofuran gelöstes sulfochloriertes Polysulfon. Der Sulfochloridgehalt des Thermoplasten beträgt ca. 0,5 Gruppen je Wiederholungseinheit. Die Suspension wird gerührt, vorsichtig entgast und zu einem Film auf einer Glasplatte ausgerackelt. Bei Raumtemperatur läßt man das Tetrahydrofuran (THF) abdampfen. Der Gehalt an Montmorillonit wird so gewählt, daß er zwischen 5 und 10 Gew.% des hinzugegeben sulfochloriertem Polysulfon liegt. Ist der Film vollständig getrocknet wird er in demineralisiertem Wasser abgelöst und danach in 10% Salzsäure bei 90°C nachbehandelt. Hierbei werden die Sulfochloridgruppen hydrolisiert und zu Sulfonsäuregruppen umgesetzt. Die erhaltene Membran wird noch in 80-90°C heißem Wasser nachbehandelt, bis keine Salzsäure mehr nachweisbar ist.
Sulfochloriertes Polysulfon mit 0,5 Gruppen $SO_2Cl$ je Wiederholungseinheit entspricht nach der Hydrolyse einer Kationenaustauscherkapazität von 1,0 Milliäquivalent je Gramm. Durch die zusätzlichen Sulfonsäuregruppen aus dem Aminoarylsulfochlorid steigt die Kationenaustauscherkapazität entsprechend ihrer Menge erheblich an und ist

nicht wasserlöslich. Bei gleicher Kationenaustauscherkapazität ist ausschließtich sulfoniertes Polysulfon wasserlöslich.

2) Sulfoniertes Polyetheretherketon mit einer Kationenaustauscherkapazität (IEC) von 0,9 Milliäquivalent je Gramm wird in heißem (T>80°C) N-Methylpyrolidon (NMP) gelöst. Die sulfochlorierte Form ist bei diesem Gehalt nicht in THF löslich. Polymere Sulfonsäuren und ihre Salze sind nicht oder nur zu einem sehr geringen Anteil in THF löslich. Zu dieser Lösung gibt man nun eine Suspension von Montmorillonit K10 in NMP,der beladen ist mit einer Aminosulfonsäure. Die Sulfonsäuregruppen liegen dabei an der Oberfläche, während die Aminogruppen sich in den Kavitäten des Montmorllonit befinden. Die Zusammensetzung der Suspension ist wieder so gewählt, daß der Feststoffgehalt zwischen 2 und 20% Gew. des Polymergehaltes beträgt. Er ist davon abhängig für welchen Einsatzbereich die Membran benötigt wird. Die Suspension wird wieder wie oben zu einer Membran verarbeitet. Das Lösungsmittel wird im Trockenschrank bei einer Temperatur zwischen 80°C und 150°C abgedampft. Die Membran wird von der Glasplatte abgelöst und in demineralisiertem Wasser für 12 Stunden bei 90°C nachbehandelt.

3) Sulfochloriertes Polysulfon und aminiertes Polysulfon werden in THF gelöst. Danach wird 10% Gew. Montmorillonit K10 (getrocknet und in protonierter Form) hinzugegeben. Die Suspension wird gerührt, entgast und wie oben zu einer Membran verarbeitet. Die Membran wird nach dem Ablösen von der Glasplatte in verd. HCl bei 80°C nachbehandelt, dabei hydrolisiert die Sulfochloridgruppe wieder zur Sulfonsäure. Danach wird die Membran wieder in demineralisiertem Wasser weiterbehandelt bis die gesamte Salzsäure aus der Membran entfernt ist.

Es wurden nun überraschende Eigenschaften der erfindungsgemäßen Komposite festgestellt:

- die Komposites weisen auch bei Temperaturen von weit über 100°C hervorragende Ionenleitfähigkeiten auf. Speziell die Protonenleitfähigkeiten der Komposites sind in diesem Temperaturbereich noch sehr gut, was zum einen auf die wasserspeichernden Eigenschaften der Tonmineralien und zum anderen auf eine Eigenprotonenleitfähigkeit der Tonmineralien zurückzuführen ist. Die guten Protonenleitfähigkeiten erlauben den Einsatz dieser Komposites in Membranbrennstoffzellen im oben angeführten Temperaturbereich.
- durch die Kavitäten bildenden Silikate wird die chemische, mechanische und thermische Stabilität der Kompositmembranen signifikant erhöht, da die Polymermoleküle und die Tonmineralien bzw. Zeolithe in den Kavitäten miteinander wechselwirken können. Insbesondere basische Polymere und basische Polymerkomponenten enthaltende Ionomerblends können durch Wechselwirkung der basischen Gruppen in die lewissauren Kavitäten der Silicate intercalieren, wodurch eine ionische Vernetzung zwischen dem sauren Silikat und der basischen Polymerkette gebildet wird, die je nach System pH-unabhängig ist, was zu einer Erhöhung der mechanischen, chemischen und thermischen Stabilität beiträgt, insbesondere wenn die Kompositmembranen in stark saurem oder stark basischem Medium eingesetzt werden.
- beim Einsatz in DMFC zeigen die erfindungsgemäßen Kompositmembranen eine verringerte Methanolpermeabilität und Gasquerdiffusion über die Membran. Dabei kann die Methanolpermeabiltiät und Permselektivität der Membran gezielt eingestellt werden durch:

- die Art des Schicht-/ Gerüstsilikates;
- den Massenanteil des Silikats im Komposit;
- gezielten Einbau von Spacermolekülen und bifunktionellen Molekülen in die silikatischen Kavitäten. Die Art und Stärke der Wechselwirkung der Spacermoleküle mit den Permeatmolekülen hängt dabei von der Art ihrer nach außen zeigenden funktionellen Gruppen und von der Art der funktionellen Gruppen der Permeatmoleküle ab. Man koppelt z.B. eine Aminosulfonsäure oder Aminocarbonsäure mit der Aminfunktion im Austausch gegen Alkalibentonit an die Bentonitoberfläche. Die zweite funktionelle Gruppe steht für die Reaktion mit Polymeren oder in Elektromembranverfahren zum Protonentransport zur Verfügung.
- die erfindungsgemäßen Membranen weisen gegenüber herkömmlichen Ionomermembranen ein stark verringertes Fouling (mikrobieller Angriff der Ionomermembranen durch Pilze und Bakterien) auf, und dies bereits bei Gehalten von 2-5% des Silikats (Montmorillonit) in der Ionomermembran. Für diese Eigenschaft sind die im Komposit eingemischten Tonmineralien verantwortlich. Es ist schon lange bekannt, daß Tonmineralien dadurch als Bodenverbesserer wirken, daß sie den mikrobiellen Abbau, insbesondere durch Pilze stark verlangsamen. Es ist überraschend, daß diese Eigenschaft der Tonmineralien auch in tonmineralhaltigen Membranen zum Tragen kommt. Wegen dieser Eigenschaft der erfindungsgemäßen Komposites ist ihre Anwendung in Membrantrennverfahren im Wasser- und Abwasserbereich möglich und auch in jeder weiteren oxidierenden Umgebung, die beispielsweise Hydroxylradikale und/ oder Wasserstoffperoxid enthält.
- die katalytischen Eigenschaften der silicatischen Lewissäuren, aus denen die erfindungsgemäßen Tonmineralien bestehen, können auch in den erfindungsgemäßen Komposites ausgenutzt werden.

1. Sulfoniertes Polyetheretherketon (Sulfonierungsgrad 70%) wird mit 5% Gew. Montmorillonit in DMAc gelöst und zu einer nach dem Abdampfen des Lösungsmittel 50μm dicken Membran gezogen. Diese Membran wird in Pilzkontaminiertes wässriges Medium gegeben. Es ist kein Pilzbefall feststellbar. Die Kontrolle ohne Montmorillonit wird stark bewachsen und angegriffen.

2. a) Sulfoniertes Polysulfon in der Salzform und Polyvinylpyridin wird in einem Verhältnis gemischt, daß man als Endkapazität 1 Milliäquivalent [$H^+$] je Gramm Gesamtmischung erhält. Beide Polymere werden in DMAc gelöst und zu einer Membran verarbeitet.
Der spezifische Widerstand, der so erhaltenen Membran beträgt 33 [Ohm x cm].
b) Der gleichen Mischung wie in 2.a. wird zusätzlich noch 8 Gew.% aktivierter Montmorillonit zugesetzt und wie 2.a zu einer Membran verarbeitet. Der spezifische Widerstand beträgt 27,7 [Ohm x cm].

3. Polybenzimidazol in DMAc gelöst, wird einmal mit 10 Gew.% aktiviertem Montmorillonit versetzt und als Kontrolle ohne das Schichtsilikat. Beide Mischungen werden je zu einer Membran verarbeitet und Mittels Impedanzspektroskopie die Widerstände bestimmt.
Ohne das Schichtsilikat beträgt der Widerstand 588 [Ohm x cm] mit Schichtsilikat 276 [Ohm x cm]

## Patentansprüche

1. Komposit enthaltend eine Säure und / oder eine organische Base und ein Schicht-/Gerüstsilikat, **dadurch gekennzeichnet, daß** die Zusammensetzung des Säure-Base Anteils zu 1 bis 99 Gew.% und das Schicht-/ Gerüstsilikat zu 99 bis 1 Gew.% enthalten ist.

2. Verfahren zur Herstellung von Komposites und Kompositblendmembranen, **dadurch gekennzeichnet, daß** die Lösung eines Ionomers oder die Lösung der Vorstufe des Ionomers mit einem Schicht- oder Gerüstsilikat oder einer Mischung aus beiden gemischt wird und aus der erzeugten Suspension das Lösungsmittel verdampft wird, wobei das Ionomer sein kann:

    **(a)** ein Kationenaustauscherpolymer (mit den Kationenaustauschergruppen -$SO_3H$, -COOH, -$PO_3H_2$, wobei das Polymer nur mit einer der beschriebenen Kationenaustausehergruppen oder mit einer Mischung der beschriebenen. Kationenaustauschergruppen, modifiziert sein kann); das Polymer kann dabei unvernetzt oder kovalent vernetzt sein; das Polymerrückgrat kann dabei ein Vinylpolymer, ein Arylhauptkettenpolymer, Polythiazol, Polypyrazol, Polypyrrol, Polyanilin, Polythiophen oder eine beliebige Mischung der Genannten sein.
    **(b)** ein Anionenaustauscherpolymer (mit den Anionenaustauschergruppen -$NR_3^+$ (R=H, Alkyl, Aryl), Pyridinium $PyrR^+$, Imidazolium $ImR^+$, Pyrazolium $PyrazR^+$, Triazolium $TriR^+$ und andere organische basische aromatische und/oder nichtaromatische Gruppierungen (R=H, Alkyl, Aryl), wobei das Polymer nur mit einer der beschriebenen Anionenaustauschergruppen oder mit einer Mischung der beschriebenen Anionenaustauschergruppen modifiziert sein kann); das Polymer kann dabei unvernetzt oder kovalent vernetzt sein; das Polymerrückgrat kann dabei ein Vinylpolymer, ein Arylhauptkettenpolymer, Polythiazol, Polypyrazol, Polypyrrol, Polyanilin, Polythiophen oder eine beliebige Mischung der Genannten sein,
    **(c)** ein Polymer, das auf der Polymerkette sowohl Anionenaustauschergruppierungen aus (a) als auch Kationenaustauschergruppierungen aus (b) enthält; das Polymerrückgrat kann dabei ein Vinylpolymer, ein Arylhauptkettenpolymer, Polythiazol, Polypyrazol, Polypyrrol, Polyanilin, Polythiophen oder eine beliebige Mischung der Genannten sein,
    **(d)** ein Blend aus (a), (b) und (C), wobei jedes Mischungsverhältnis angenommen werden, wobei der Blend zusätzlich zur ionischen Vernetzung noch kovalent vernetzt sein kann;

    und das Polymerrückgrat kann dabei ein Vinylpolymer, ein Arylhauptkettenpolymer, Polythiazol, Polypyrazol, Polypyrrol, Polyanilin, Polythiophen oder eine beliebige Mischung der Genannten sein,
    wobei die Vorstufe des Ionomers sein kann:

    (a) die Vorstufe eines Kationenaustauscherpolymers
    (a1) ein Polymer mit COHal-, $CONR_2$- oder COOR-Gruppen (R=H, Alkyl, Aryl, Hal=F, Cl, Br, I))
    (a2) ein Polymer mit $SO_2Hal$-, $SO_2NR_2$- oder $SO_2OR$-Gruppen (R=H, Alkyl, Aryl, Hal=F, Cl, Br, I)
    (a3) ein Polymer mit $PO_3Hal_2$-, $PO_3(NR_2)_2$- oder $PO_3(OR)_2$-Gruppen (R=H, Alkyl, Aryl, Hal=F, Cl, Br, I)
    (b) die Vorstufe eines Anionenaustauscherpolymers (mit den Gruppen -$NR_2$ (R=H, Alkyl, Aryl), Pyridyl Pyr, Imidazolyl Im, Pyrazolyl Pyraz, Triazolyl Tri und/oder anderen organischen basischen aromatischen und/oder

nichtaromatischen Gruppierungen

(R=H, Alkyl, Aryl).

**3.** Silikat nach Anspruch 1 und 2 **dadurch gekennzeichnet, daß** es auf der Basis von Montmorillonit, Smectit, Illit, Sepiolit, Palygorskit, Muscovit, Allevardit, Amesit, Hectorit, Talkum, Fluorhectorit, Saponit, Beidelit, Nontronit, Stevensit, Bentonit, Glimmer, Vermiculit, Fluorvermiculit, Halloysit, Fluor enthaltende synthetische Talkumtypen oder Mischungen aus zwei oder mehr der genannten Schichtsilikate ist, wobei das Silikat delaminiert oder pillartiert sein kann und/oder das Silikat aus der Gruppe der Gerüstsilikate (Tectosilicate) ist.

**4.** Basische Komponente nach Anspruch 1 oder 2, **dadurch gekennzeichnet**, sie Imidazol-, Vinylimidazol-, Pyrrazol-, Oxazol-, Cabazol-, Indol-, Isoindol-, Dihydrooxazol-, Isooxazol-, Thiazol-, Benzothiazol-, Isothiazol-, Benzoimidazol-, Imidazolidin, Indazol, 4,5-Dihydropyrazol, 1,2,3-Oxadiazol, Furazan, 1,2,3-Thiadiazol, 1,2,4-Thiadiazol, 1,2,3-Benzotriazol, 1,2,4-Triazol, Tetrazol, Pyrrol, Anilin, Pyrrolidin- oder Pyrrazolgruppen enthält.

**5.** Polymer nach Anspruch 1 oder 2 **dadurch gekennzeichnet, daß** das Polymerrückgrat ein Aryl-Hauptkettenpolymere ist, wobei die möglichen Bausteine der Aryl-Hauptkettenpolymere sind (Abb. a):

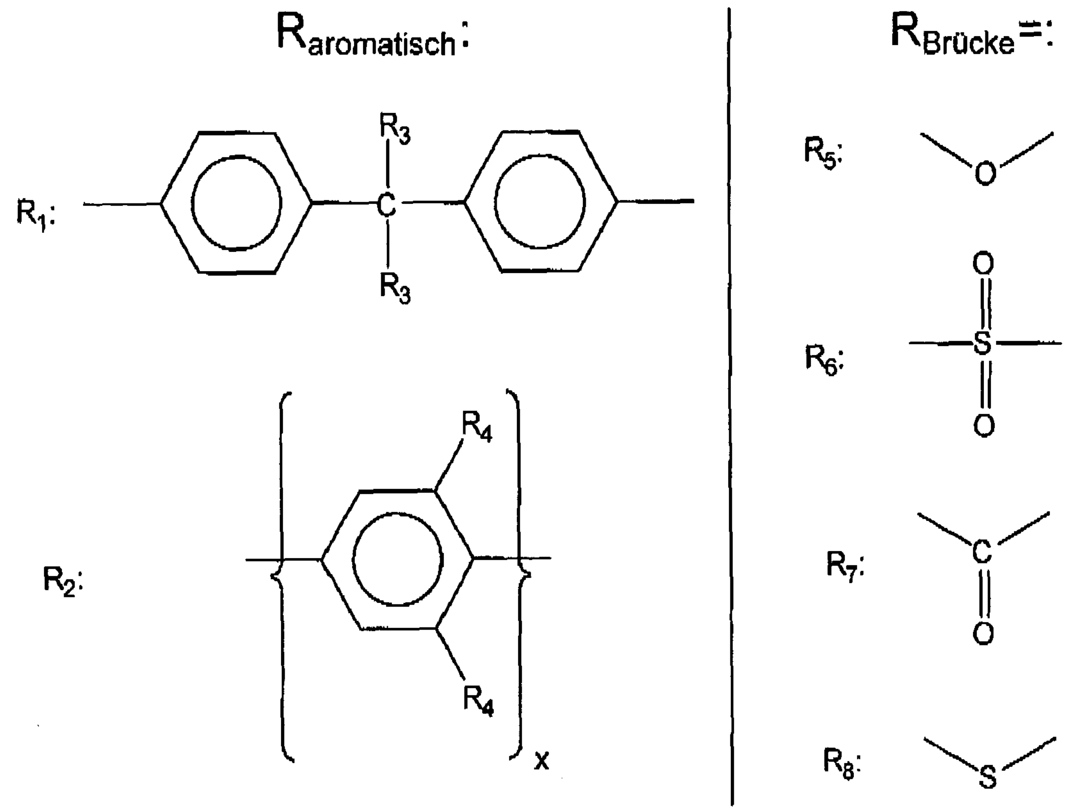

(Abb. a: Bausteine von Arylhauptkettenpolymeren)

wobei
mögliche, aus den Bausteinen aus Abb. a zusammengesetzte Arylhauptkettenpolymere sind:

- Poly(etheretherketon) PEEK Victrex® ($[R_5-R_2-R_5-R_2-R_7]_n$; x=1, $R_4$=H),
- Poly(ethersulfon) PSU Udel® ($[R_1-R_5-R_2-R_6-R_2-R_5]_n$; $R_2$; x=1, $R_4$=H),
- Poly(ethersulfon) PES VICTREX® ($[R_2-R_6-R_2-R_5]_n$; $R_2$: x=1, $R_4$=H),
- Poly(phenylsulfon) RADEL R® ($[(R_2)_2-R_5-R_2-R_6-R_2]_n$; $R_2$: x=2, $R_4$=H),
- Polyetherethersulfon RADEL A® ($[R_5-R_2-R_5-R_2-R_6]_n-[R_5-R_2-R_6-R_2]_m$;

$R_2$: x=1, $R_4$=H, $\frac{n}{m}$=0,18),

- Poly(phenylensulfid) PPS ($[R_2-R_8]_n$; $R_2$: x=1, $R_4$=H)
- Poly(phenylenoxid) PPO ($[R_2-R_5]_n$; $R_4=CH_3$).

und/oder

Polymerrückgrat des basischen Polymers aus der Gruppe der Aryl-Hauptkettenpolymere (Abb. a) oder aus der Gruppe der Hetaryl-Hauptkettenpolymere ausgewählt ist, wobei die möglichen Bausteine der Hetaryl-Hauptkettenpolymere sind (Abb. b):

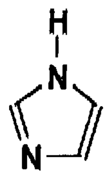
1

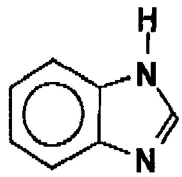
2

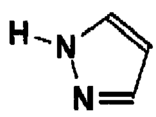
3

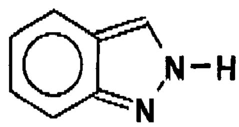
4

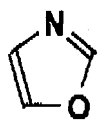
5

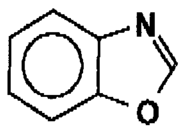
6

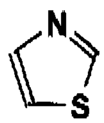
7

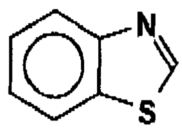
8

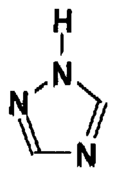
9

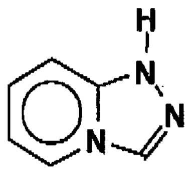
10

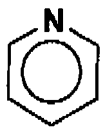
11

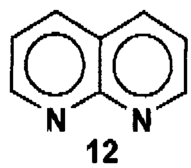
12

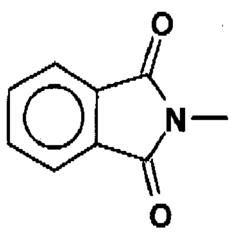
13

Abb.b: Bausteine von Hetarylpolymeren (1 Imidazol, 2 Benzimidazol, 3 Pyrazol, 4 Benzpyrazol, 5 Oxazol, 6 Benzoxazol, 7 Thiazol, 8 Benzthiazol, 9 Triazol, 10 Benzotriazol, 11 Pyridin, 12 Bipyridyl, 13 Phtalsäureimid,

wobei

als folgende Polymere in Frage kommen

- Polyimidazole, Polybenzimidazole

- Polypyrazole, Polybenzpyrazole
- Polyoxazole, Polybenzoxazole
- Polythiazole, Polybenzthiazole
- Polythiophene, Polybenzthiophene
- Polypyridine
- Polyimide.

**6.** Komposites und Kompositblendmembranen nach Anspruch 1 oder 2 **dadurch gekennzeichnet, daß** sie in Membranbrennstoffzellen bei Temperaturen von -40°C bis 200°C, Dialyse, Diffusionsdialyse, Gastrennung, Pervaporation, Perstraktion, Mikro- Ultra- und Nanofiltration, in der Umkehrosmose, als katalytische Membranen oder in Membranreaktoren eingesetzt werden.

**7.** Komposit nach Anspruch 1 zum Beschichten von flächigen Gebilden, insbesondere Membranen, Folien und Elektroden.

**8.** Verfahren zur Herstellung eines Komposites nach Anspruch 1, **dadurch gekennzeichnet, daß** die organische Komponente und die erfindungsgemäße silikatische Komponente bei Temperaturen von -40°C bis 300°C in einem Lösemittel oder gegebenenfalls lösemittelfrei miteinander in Kontakt gebracht werden.

**9.** Herstellung einer Komposit-Membran nach Anspruch 16 oder eines Komposites, **dadurch gekennzeichnet, daß** eine Membran, die aus einem entsprechenden Blend oder allein aus einer der Komponenten aus den Ansprüchen 2, 6, 9, 10, und 11 besteht mit einer die silikatische Komponente enthaltenen Lösung oder Dispersion oder lösemittelfrei beschichtet wird.

**10.** Komposit enthaltend eine nierdermolekulare organische Phosphonsäure, eine organische Base, eine polymere Sulfonsäure, und ein Schicht- oder Gerüstsilikat, wobei sich die Phosphonsäure und die organische Base im selben Molekül befinden können und der Komposit gegebenenfalls zusätzlich noch Phosphorsäure enthält.

Zeichnung 1/1

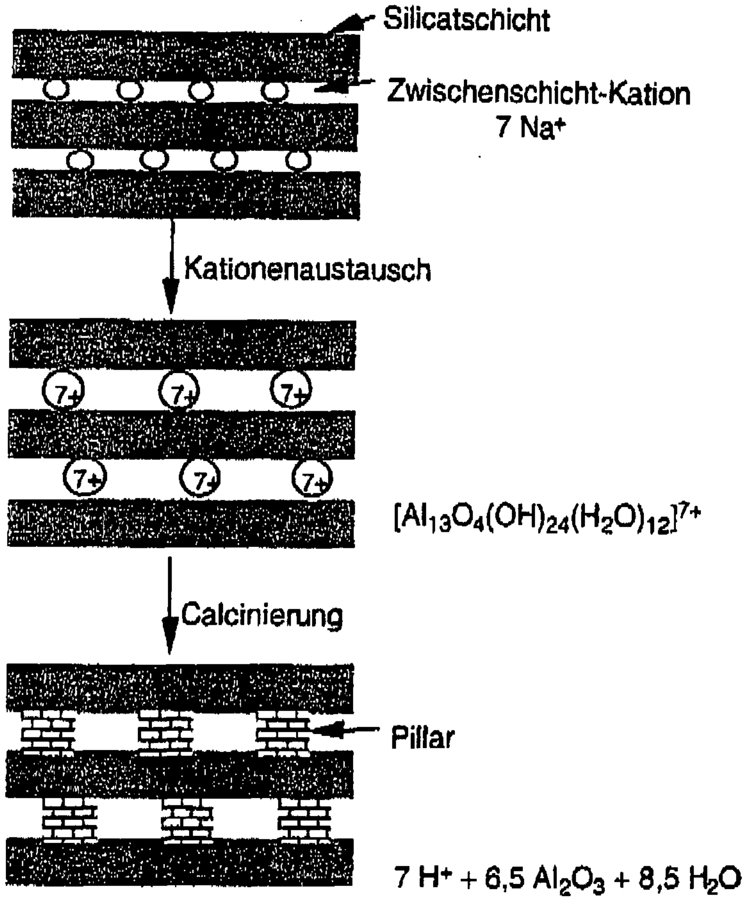

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6042958 A
- EP 0574791 B1


### In der Beschreibung aufgeführte Nicht-Patentliteratur


- **ALBERTI et al.** *SSPC9, Bled,* 17. August 1998, 235
- **ANTONUCCI.** *SSPC9, Bled,* 17. August 1998, 187